# EUROPEAN PATENT APPLICATION

(11) **EP 0 536 417 A1**
(43) Date of publication of application: **14.04.1993**
(21) Application number: 92909486.0
(22) Date of filing: 23.04.1992
(51) Int. Cl.: G05B 19/18, G05B 19/405

(54) **WIRELESS CONTROL BOARD, AND METHOD OF CONNECTION BETWEEN THE WIRELESS CONTROL BOARD AND NUMERIC CONTROLLER**

(30) Priority: 24.04.1991 JP 94390/91
(71) Applicant: FANUC LTD., Minamitsuru-gun, Yamanashi 401-05 (JP)
(72) Inventor: KANDA, Kunio, Gotenba-shi Shizuoka 412 (JP)
(74) Representative: Brunner, Michael John
(86) International application number: JP9200529
(87) International publication number: WO9220018

(57) **Abstract**

Wire communication means is added to a portable control board (OP) designed originally for exchanging instructions and signals with a numeric controller (NC), so that wire communication channels are established between the control board and numeric controllers (NC). Therefore, unexpected erroneous connection is prevented even if the same ID number is allotted erroneously to a plurality of numeric controllers (NC) or if a wrong control board (OP) is used.

## Description

### BACKGROUND OF THE INVENTION

This invention relates to a wireless manual operating board and a method for connecting a wireless manual operating board and a numerical control apparatus. More specifically, this invention relates to an improvement applicable to the foregoing operating board and the foregoing method developed for the purpose to prevent an operating board from being connected to a wrong numerical control apparatus.

A numerical control apparatus is inherently provided with manual operating apparatuses. However, the manual operating apparatuses are not necessarily arranged in the neighborhood of an area from which an operator is allowed to observe the situation in which a work is being machined. Particularly, it is not usually easy to optically inspect the machining of a work from a location at which an operator is allowed to operate the manual operating apparatuses provided to a numerical control apparatus.

Therefore, in addition to the manual operating apparatuses provided to a numerical control apparatus, a portable wireless manual operating board is generally employed.

This portable wireless manual operating board is designed to be capable of selecting an arbitrary numerical control apparatus by a wireless means, following a manual operation conducted by an operator and to be capable of transmitting and receiving commands and signals by a wireless means.

An example of a wireless manual operating board and an example of a method for connecting wireless manual operating board and a numerical control apparatus available in the prior art will be described below.
a. A numerical control apparatus is allocated an ID number identical to that of the portable wireless manual operating board with which the numerical control apparatus is operated.
b. When being applied power supply, the portable wireless manual operating board automatically selects a carrier frequency which is not presently employed and employs this carrier frequency to transmit its own ID number (the same number to the ID number of the numerical control apparatus which is presently searched) to all the numerical control apparatuses.
c. In response to this transmission of the ID number, the numerical control apparatus having this ID number (the numerical control apparatus which is presently searched) transmits an acceptance signal, employing the foregoing selected carrier frequency. Provided this acceptance signal is received by the portable wireless manual operating board, a wireless communication channel is established between the portable wireless manual operating board and the numerical control apparatus. Thereafter, wireless communication is available between the portable wireless manual operating board and the numerical control apparatus.

If an ID number is erroneously allocated to plural numerical control apparatuses, the plural numerical control apparatuses turn out to be simultaneously operated by plural portable wireless manual operating boards. On the other hand, if a wrong portable wireless manual operating board is erroneously employed, the corresponding wrong numerical control apparatus turns out to be operated. Either case causes dangerous position and erroneous machining.

A first object of this invention is to provide a portable wireless manual operating board which has no possibility to be connected a wrong numerical control apparatus.

A second object of this invention is to provide a method for connecting a portable wireless manual operating board and a numerical control apparatus wherein there is no possibility for the portable wireless manual operating board to be connected a wrong numerical control apparatus.

### SUMMARY OF THE INVENTION

To achieve the foregoing first object of this invention, a wireless manual operating board which transmits commands and signals to or receive commands and signals from a numerical control apparatus by wireless means in accordance with this invention is provided with a wire system employable for establishing a wireless communication channel which connects the wireless manual operating board with a numerical control apparatus.

It is convenient if a connecting line essential for the foregoing wire system is automatically discontinued and stored in the portable wireless manual operating board or the numerical control apparatus in response to establishment of a wireless communication channel.

It is more convenient if the portable wireless manual operating board is equipped with a chuck for connecting the portable wireless manual operating board with the numerical control apparatus, the chuck being employable for one-touch connection of the portable wireless manual operating board and the numerical control apparatus.

To achieve the foregoing second object of this invention, a method for connecting a wireless manual operating board and a numerical control apparatus in accordance with this invention is a method conducted by employing the foregoing wireless manual operating board having a wire system employable for establishing a wireless communication channel which connects the wireless manual operating board and a numerical control apparatus.

### BRIEF DESCRIPTION OF THE DRAWINGS

Fig. 1 is a schematic drawing illustrating the relative position among a portable wireless operating board in accordance with one embodiment of this invention, a numerical control apparatus and a machine tool controlled by the numerical control apparatus.

Fig. 2 is a schematic drawing illustrating the relative position among a portable wireless operating board in accordance with one modification of this invention, a numerical control apparatus and a machine tool controlled by the numerical control apparatus.

Fig. 3 is a schematic drawing illustrating the relative position among a portable wireless operating board in accordance with the other modification of this invention, a numerical control apparatus and a machine tool controlled by the numerical control apparatus.

### DETAILED DESCRIPTION OF PREFERRED EMBODIMENT

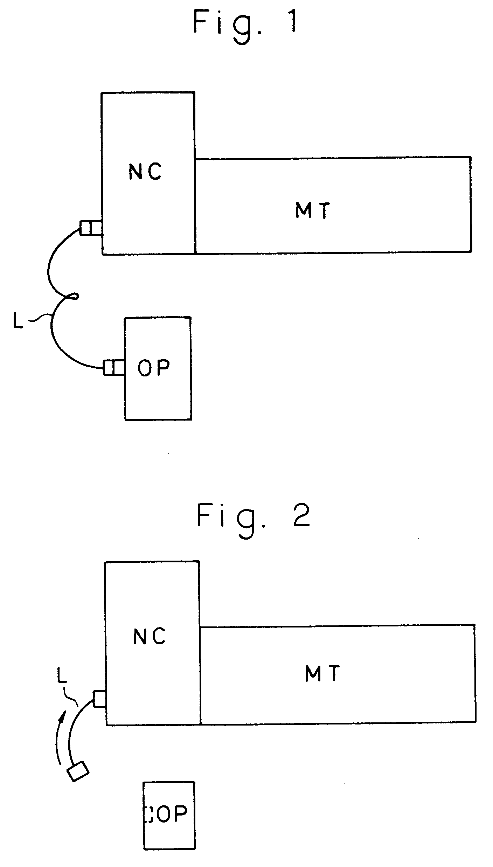

Referring to Fig. 1, a machine tool MT is controlled by a numerical control apparatus NC which is operated by a portable wireless manual operating board OP. Since the portable wireless manual operating board OP is inherently designed to communicate with the numerical control apparatus NC by a wireless means, a line connecting the numerical control apparatus NC and the portable wireless manual operating board OP is inherently unnecessary. However, since a wire system is employed for establishing a wireless communication channel, in this invention, the numerical control apparatus NC is kept connected with the portable wireless manual operating board OP by a connecting line L attached by a one-touch-connecting plug until a wireless communication channel is established.

In order to establish a wireless communication channel between the portable wireless manual operating board OP and the numerical control apparatus NC, an operator employs the portable wireless manual operating board OP to transmit the ID number of the portable wireless manual operating board OP toward the numerical control apparatus NC by a wire means. In response to this approach, the numerical control apparatus NC transmits its own ID number toward the portable wireless manual operating board OP by a wire means. Provided these two signals are proven identical to each other, a carrier frequency which is not presently employed is automatically selected, and the portable wireless manual operating board OP and the numerical control apparatus NC are connected by a wireless means which employs the selected carrier frequency to establish a wireless communication channel. Thereafter, this wireless communication channel is employed to transmit and receive commands and signals.

The foregoing system wherein the ID numbers are confirmed by a wire means for establishing a wireless communication channel does not limit this invention. Any wire system is acceptable, if it is effective to establish a wireless communication channel.

Referring to Fig. 2, the connecting line L attached by a one-touch-connecting plug becomes unnecessary, once a wireless communication channel is established. Therefore, this modification is designed to automatically discontinue the connecting line L and to store it in the portable wireless manual operating board or in the numerical control apparatus preferably in the numerical control apparatus, once a communication channel is established.

The operation for establishing a wireless communication channel is identical to that which was described, referring to Fig. 1.

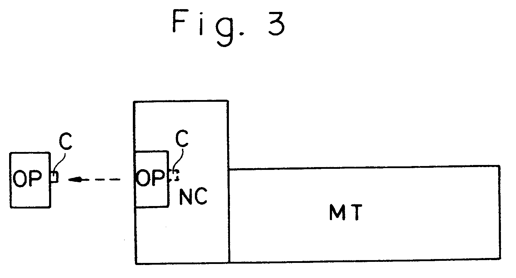

Referring to Fig. 3, this modification is provided a pair of connecting means C with which a portable and wireless manual operating board is attached to a numerical control apparatus for the purpose to establish a wireless communication channel. Therefore, this modification does not employ a cable.

The operation for establishing a wireless communication channel is identical to that which was described, referring to Fig. 1.

Referring to Figs. 1, 2 and 3, a method for connecting a portable wireless manual operating board OP and a numerical control apparatus NC is a method for connecting them by employing a portable wireless manual operating board OP described referring to Fig. 1, Fig. 2 or Fig. 3. In other words, the connecting line L or the connecting means C is employed to connect a portable wireless manual operating board OP and a numerical control apparatus NC. Then, the ID number of the portable wireless manual operating board OP is transmitted to the numerical control apparatus NC by a wire system. In response, the ID number of the numerical control apparatus NC is transmitted to the portable wireless manual operating board OP by a wire system. Provided the both ID numbers are identical to each other, a carrier frequency which is not presently employed is automatically selected, and the portable wireless manual operating board OP is connected to the numerical control apparatus NC by a wireless communication channel which employs the selected carrier frequency. Thereafter, this wireless communication channel is employed to transmit and receive commands and signals between the portable wireless manual operating board OP and the numerical control apparatus NC. Since the wire system is unnecessary after the wireless communication channel is established, the portable wireless manual operating board OP is allowed to be detached from the numerical control apparatus NC. Therefore, in the case of Fig. 2, the portable wireless manual operating board OP is automatically discontinued from the numerical control apparatus NC, and in the case of Fig. 3, the portable wireless manual operating board OP is discontinued from the numerical control apparatus NC, when it is lift up by an operator.

A step for confirming ID numbers by means of a wire system is not an essential step which limits this invention. An arbitrary wire system effective to establish a wireless communication channel is acceptable.

The foregoing description has clarified that this invention successfully provided a wireless manual operating board which is not accompanied by possibility of erroneous connection of a portable wireless manual operating board OP with a wrong numerical control apparatus NC as well as a method for connecting a wireless manual operating board and a numerical control apparatus which is not accompanied by possibility of erroneous connection of a portable wireless manual operating board OP and a numerical control apparatus NC.

## Claims

1. A portable wireless manual operating board for transmitting and receiving commands and signals between said operating board and a numerical control apparatus by means of a wireless system, comprising :
a wire system employable for establishing a wireless communication channel for connecting said operating board to said numerical control apparatus.

2. A portable wireless manual operating board in accordance with claim 1, wherein the connecting line constituting said wire system is automatically discontinued and stored in said operating board or said numerical control apparatus, in response to establishment of said wireless communication channel.

3. A portable wireless manual operating board in accordance with claim 1, wherein said wire system is a pair of connecting means with which said portable wireless manual operating board is attached to said numerical control apparatus to establish said wireless communication channel.

4. A method for connecting a wireless manual operating board and a numerical control apparatus, wherein said portable wireless manual operating board in accordance with claim 1, 2 or 3 is employed to establish said wireless communication channel.
